# FASCICULE DE BREVET EUROPEEN

(11) **EP 1 274 185 B1**
(45) Date de publication et mention de la délivrance du brevet: **20.10.2004**
(21) Numéro de dépôt: 02291648.0
(22) Date de dépôt: 02.07.2002
(51) Int. Cl.: H04B 10/17

(54) **Système de transmission optique avec amplification par diffusion Raman stimulée et égalisation de gain**
Optisches Übertragungssystem mit stimulierter Ramanstreuungsverstärkung und Verstärkungsausgleich
Optical transmission system with stimulated Raman scattering amplification and gain equalization

(30) Priorité: 05.07.2001 FR 0108940
(43) Date de publication de la demande: 08.01.2003
(73) Titulaire: ALCATEL, 75008 Paris (FR)
(72) Inventeur: Le Roux, Patrice, 91140 Villebon sur Yvette (FR); Labrunie, Laurent, 75018 Paris (FR); Blondel, Jean-Pierre, 78530 Buc (FR); Boubal, Francois, 75013 Paris (FR); Buet, Laurence, 75014 Paris (FR); Brandon, Eric, 75015 Paris (FR); Havard, Vincent, 94600 Choisy le Roi (FR)
(74) Mandataire: Lamoureux, Bernard

(56) Documents cités:
- WO-A-00/04613
- WO-A-00/49741
- MASUDA H ET AL: "Ultra-wideband optical amplification with 3 dB bandwidth of 65 nm using a gain-equalised two-stage erbium-doped fibre amplifier and Raman amplification" ELECTRONICS LETTERS, IEE STEVENAGE, GB, vol. 33, no. 9, 24 avril 1997 (1997-04-24), pages 753-754, XP006007380 ISSN: 0013-5194
- MASUDA H ET AL: "WIDE-BAND AND GAIN-FLATTENED HYBRID FIBER AMPLIFIER CONSISTING OF AN EDFA AND A MULTIWAVELENGTH PUMPED RAMAN AMPLIFIER" IEEE PHOTONICS TECHNOLOGY LETTERS, IEEE INC. NEW YORK, US, vol. 11, no. 6, juin 1999 (1999-06), pages 647-649, XP000835425 ISSN: 1041-1135

## Description

L'invention concerne le domaine des télécommunications optiques. L'invention concerne tout particulièrement un système de transmission doté de moyens d'amplification de signaux transportés par une fibre optique.

De manière connue, les signaux transportant des données sont le plus souvent multiplexés en longueurs d'onde selon la technique WDM (Wavelength Division Multiplexing en anglais) ou DWDM (Dense WDM) et sont transmis simultanément dans la fibre optique de ligne. Ces signaux WDM forment un peigne de longueurs d'onde distinctes mais très proches (l'espacement étant de l'ordre de grandeur du nanomètre) le plus souvent dans la bande de transmission dite bande C (1530-1560 nm) ou dans la bande dite L (1565-1610 nm).

Lors de transmissions de signaux par fibre optique sur de longues distances, on amplifie les signaux de type WDM en particulier pour compenser leur atténuation au cours de leur propagation dans la fibre de ligne. Parmi les techniques d'amplification de signaux figure l'amplification optique par diffusion Raman stimulée (SRS pour Stimulated Raman Scattering en anglais). Cette technique permet de réaliser une amplification optique dans la fibre de ligne elle-même, et/ou d'élargir les bandes utiles de transmission des réseaux à fibre optiques. Par exemple, elle permet d'augmenter le produit [capacité x distance] d'une liaison entre terminaux : on peut donc allonger la portée d'une liaison ou augmenter la capacité de transmission.

Une liaison à fibre optique comportant un amplificateur Raman et un amplificateur à fibre dopée est décrit les articles « Ultra-wideband optical amplification with a 3dB bandwith of 65 nm using a gain-equalised two-stage erbium-doped fibre amplifier and Raman amplification » H. Masuda et al., Electronic Letters, 24 April 1997, vol. 33, No. 9, pages 753-754 et « Wide-band and gain-flattened hybrid fiber amplifier consisting of an EDFA and a multiwavelength pumped Raman amplifier », H. Masuda, IEEE Photonics Technology Letters, vol. 11, No. 6, June 1999, pages 647-649

L'amplification par diffusion Raman stimulée nécessite une pompe qui produit un signal dit signal de pompe généralement de forte puissance et de longueurs d'onde comprises entre 1400 et 1500 nm. Injecté dans la fibre de ligne, ce signal de pompe se propage avec les signaux transportant les données sur la fibre de ligne.

L'amplification par diffusion Raman stimulée est notamment employée dans les liaisons sans répéteurs optiques c'est-à-dire sans dispositifs d'amplification optique contenant des éléments électriquement actifs. Dans ces dernières liaisons, l'amplification optique par diffusion Raman stimulée est alors réalisée de façon déportée en injectant le signal de pompe depuis un terminal émetteur ou un terminal récepteur.

L'amplification par diffusion Raman stimulée est réalisée de façon progressive sur une portion de la longueur de la fibre de ligne dite longueur d'amplification : on parle d'amplification distribuée. Ainsi, le signal de pompe injecté dans la fibre de ligne fournit une alimentation continue et répartie en photons sur la longueur d'amplification, qui est par exemple la portion terminale de la fibre voisine du terminal récepteur. Typiquement pour des fibres optiques dont le coeur est en silice, cette longueur d'amplification s'étend sur plusieurs dizaines de kilomètres.

La diffusion Raman stimulée associée à cette technique d'amplification est décrite dans l'ouvrage de G. P. Agrawal, Nonlinear Fiber Optics, Academic Press 1980. C'est un phénomène non linéaire de diffusion inélastique entre lumière et matière. De façon résumée, la diffusion partielle du signal de pompe dans le coeur de la fibre de ligne provoque des mouvements de rotation et de vibration des molécules du coeur. Ceci génère notamment des raies dites Stokes des longueurs d'ondes supérieures à celle du signal de pompe. Ces raies Stokes sont continuellement alimentées en photons de sorte qu'elles sont renforcées par émission stimulée et se propagent en phase dans une seule direction de propagation. Par conséquent, les raies de mêmes longueurs d'onde que les signaux WDM transportés par la fibre se superposent aux signaux WDM et ainsi les amplifient. En somme, l'amplification par diffusion Raman stimulée est associée à un transfert de puissance entre le signal de pompe et les signaux WDM.

Plus la puissance du signal de pompe est élevée, plus l'amplification des signaux est importante car le gain Raman est une fonction croissante de la puissance du signal de pompe injecté. Cependant, dans les systèmes de transmission par fibre optique, l'amplification par diffusion Raman stimulée devient néfaste à partir d'un seuil d'amplification dit amplification critique.

Cette limitation du bénéfice de l'amplification par diffusion Raman stimulée provient de la diffusion Rayleigh comme l'indiquent P. B. Hansen et autres, « Rayleigh scattering limitations in distributed Raman pre-amplifiers », OFC'97 Technical Digest, FA2. La diffusion Rayleigh est également liée à une interaction entre lumière et matière. De façon résumée, un signal qui traverse le coeur d'une fibre est partiellement rétrodiffusé en chaque point de la fibre optique et ce même signal rétrodiffusé peut lui-même subir ce phénomène de rétrodiffusion : on parle ainsi de double rétrodiffusion Rayleigh (DRS pour Double Rayleigh Scattering en anglais). L'onde ayant subi une double rétrodiffusion Rayleigh se recombine ainsi avec le signal optique initial.

Le signal doublement rétrodiffusé par effet Rayleigh est également amplifié par diffusion Raman stimulée sur la longueur d'amplification. Or la combinaison d'un tel signal avec un signal utile à transmettre dégrade la qualité de la transmission optique et peut aller jusqu'à interrompre le trafic lorsque l'amplification critique est atteinte. Typiquement, le coefficient de rétrodiffusion Rayleigh d'une fibre optique standard étant d'environ -30 dB, lorsque l'amplification Raman fournit un gain optique supérieur à 30 dB, l'amplification critique est atteinte, et la transmission des données devient impossible.

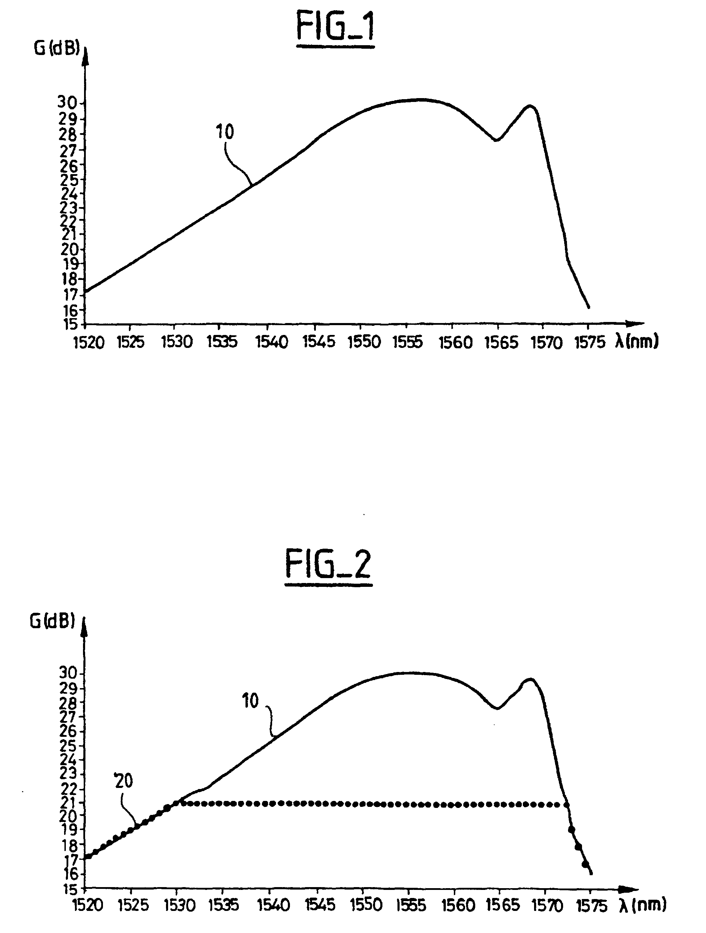

Par ailleurs, le gain Raman est fonction de la longueur d'onde. Ainsi, il diffère pour chaque signal WDM de longueur d'onde distincte. Ceci est illustré en figure 1 dans laquelle la courbe 10 montre le profil caractéristique du gain Raman G à l'entrée d'un terminal récepteur en fonction de la longueur d'onde λ des signaux comprise entre 1520 nm et 1575 nm, dans le cas d'un pompage à environ 1455 nm. L'amplification par diffusion Raman stimulée est typiquement réalisée à partir de l'injection dans une fibre standard d'un signal de pompe de puissance égale à environ 1 W.

La variation du gain Raman en fonction de la longueur d'onde se traduit par une variation des puissances optiques respectives des signaux WDM à leur entrée dans le terminal récepteur. La qualité de la transmission des signaux WDM étant proportionnelle à leurs puissances respectives à l'entrée du terminal récepteur, les signaux WDM bénéficiant du maximum d'amplification Raman présentent ainsi les meilleures performances. On cherche donc à obtenir un gain optimal et plat sur toute la bande de transmission des signaux WDM de façon à bénéficier d'une qualité de transmission optimisée pour tous les signaux.

Cependant, compte tenu du problème de DRS évoqué plus haut, le signal le plus amplifié fixe la valeur de la puissance de pompe à ne pas dépasser sous peine de dégrader, voire de couper la transmission de ce signal. De ce fait, ce signal atteint l'amplification la plus proche de l'amplification critique mais les autres signaux WDM de la bande de transmission subissent une amplification moindre.

Pour aplanir la courbe de gain et ainsi obtenir des performances de transmission homogènes pour tous les signaux WDM, une solution de l'art antérieur consiste à placer à l'entrée du terminal récepteur un composant passif tel qu'un filtre égaliseur de gain (GEF pour Gain Equalisation Filter en anglais) qui introduit des pertes pour chaque signal en fonction de sa longueur d'onde.

Le profil du gain en fonction de la longueur d'onde λ entre 1520 nm et 1575 nm qui est obtenu par cette solution à l'entrée d'un terminal récepteur avec un GEF est présenté en figure 2 sur la courbe 20. L'amplification est également réalisée à partir de l'injection d'un signal de pompe de puissance égale à 1 W à 1455 nm sur fibre standard (de type G.652 ou autre). Sur la figure 2, on voit que le GEF ramène l'amplification Raman à la valeur de l'amplification du signal de la bande C le moins amplifié de longueur d'onde 1530 nm. Il induit ainsi un gain égal à environ 21 dB sur toute la bande passante. Le signal le plus amplifié de longueur d'onde 1555 nm par le gain Raman passe donc de 30 dB à 21 dB environ. Cette solution ne permet donc pas de s'approcher de l'amplification critique.

Un système de transmission WDM utilisant l'amplification Raman doit donc répondre à la double contrainte suivante : un gain plat sur une bande de transmission la plus large possible ainsi qu'une amplification la plus forte possible et la plus proche de l'amplification critique.

L'invention a pour but de mettre au point un système de transmission utilisant l'amplification Raman et permettant d'atteindre le niveau d'amplification le plus élevé possible sur toute la bande de transmission.

L'invention propose à cet effet un système de transmission par fibre optique entre un dispositif émetteur et un dispositif récepteur d'au moins deux signaux de longueurs d'onde distinctes qui comprend :
- une fibre optique de ligne,
- des moyens de pompage pour envoyer dans ladite fibre de ligne un signal de pompe destiné à amplifier par diffusion Raman stimulée lesdits signaux de manière distribuée sur une longueur dite d'amplification de ladite fibre,
- des moyens d'égalisation de gain tels que chaque signal est amplifié avec un gain sensiblement identique,
**caractérisé en ce que** lesdits moyens d'égalisation de gain sont disposés en ligne sur ladite longueur d'amplification de sorte que le gain de chaque signal est voisin du gain du signal le plus amplifié.

Selon l'invention, les moyens d'égalisation de gain sont disposés en ligne sur la longueur d'amplification et introduisent des pertes en fonction de la longueur d'onde. Ainsi, ils laissent passer les signaux les moins amplifiés par une amplification Raman et atténuent suffisamment le ou les signaux le(s) plus amplifié(s) pour ne pas dépasser l'amplification critique.

Par conséquent, les moyens d'égalisation de gain permettent de déplacer le seuil de puissance provoquant la DRS à une valeur supérieure si bien qu'il est possible d'injecter de plus fortes puissances (atteignant le Watt) que dans les solutions de l'art antérieur afin d'atteindre une amplification supérieure pour l'ensemble des signaux considérés qui peut être proche de l'amplification critique.

De plus, le gain selon l'invention est plat sur toute la bande passante et contrairement à l'art antérieur, ceci n'est pas réalisé en abaissant le gain Raman à la valeur du gain du signal le moins amplifié mais à celle du signal le plus amplifié par une amplification Raman.

De plus, en n'utilisant qu'un seul signal de pompe, le système de transmission selon l'invention permet d'augmenter à faible coût la bande de transmission.

Dans un mode de réalisation de l'invention, les moyens d'égalisation de gain peuvent être passifs.

Dans un autre mode de réalisation de l'invention, les moyens d'égalisation de gain peuvent être programmables.

Ceci est possible en utilisant des programmes qui calculent en temps réel les configurations d'amplification et ajustent les paramètres pour maintenir une amplification homogène et élevée à chaque instant.

De préférence, les moyens d'égalisation de gain selon l'invention peuvent comprendre un GEF.

Dans un mode de réalisation de l'invention, des moyens de pompage peuvent être disposés du côté du dispositif récepteur.

Dans un autre mode de réalisation de l'invention, des moyens de pompage peuvent être disposés du côté du dispositif émetteur.

Selon l'invention, le signal de pompe peut être contra-propagatif ou co-propagatif c'est-à-dire être couplé dans la fibre de ligne dans le sens opposé ou dans le même sens que les signaux utiles.

Dans un mode de réalisation de l'invention, un système de transmission peut comprendre une section de fibre dopée à l'erbium.

Des fibres optiques dopées à l'aide de terres rares et plus particulièrement l'erbium sont souvent utilisées dans le cadre d'une amplification locale dite EDFA (Erbium Doped Fiber Amplification en anglais) de signaux WDM.

Dans ce dernier mode de réalisation, la section de fibre dopée à l'erbium peut être déportée, par exemple à plusieurs dizaines de kilomètres du dispositif émetteur ou récepteur.

Ainsi, il est avantageux pour le système de transmission selon l'invention d'insérer dans la fibre de ligne une section de fibre dopée déportée pour réaliser une amplification EDFA déportée de signaux WDM notamment pour augmenter les distances des liaisons sans répéteurs optiques. L'amplification EDFA déportée utilise les moyens de pompage de l'invention placés au voisinage du dispositif récepteur ou du dispositif émetteur. De plus, cette amplification est dite locale car elle est réalisée dans la fibre dopée typiquement sur quelques dizaines de mètres.

A titre d'exemple, l'amplification EDFA déportée peut être utilisée pour une préamplification déportée des signaux WDM de la bande C. Cette amplification est obtenue en injectant un fort signal de pompe à 1480 nm dans la fibre de ligne en amont du dispositif récepteur. Plus la puissance du signal pompe à 1480 nm est élevée, plus les performances de l'amplification EDFA sont bonnes (gain élevé) et plus la section de fibre dopée peut être distante du dispositif récepteur.

L'amplification Raman est également créée par le fort signal de pompe à 1480 nm. Les moyens d'égalisation de gain de l'invention repoussent le seuil d'amplification critique et permettent en outre de filtrer le bruit généré par l'amplification Raman autour de 1585 nm. Il est donc possible d'injecter un signal de pompe plus puissant (supérieur au Watt), ce qui permet d'augmenter les performances de l'amplification EDFA et celles de l'amplification Raman et d'obtenir un gain plat des signaux à l'entrée du dispositif récepteur.

Les caractéristiques et objets de la présente invention ressortiront de la description détaillée donnée ci-après en regard des figures annexées, présentées à titre illustratif et nullement limitatif. Dans ces figures :
- la figure 1 représente le profil caractéristique du gain Raman à l'entrée d'un dispositif récepteur dans un système de l'art antérieur,
- la figure 2 représente le profil caractéristique du gain Raman et le profil d'un gain Raman aplani par un GEF à l'entrée d'un dispositif récepteur dans un système de l'art antérieur,
- la figure 3 représente une vue schématique d'un système de transmission selon l'invention dans un premier mode de réalisation,
- la figure 4 représente le profil d'un GEF du système de transmission de la figure 3,
- la figure 5 représente le gain à l'entrée d'un dispositif récepteur du système de transmission de la figure 3,
- la figure 6 représente un système de transmission selon l'invention dans un second mode de réalisation.

Dans toutes ces figures, les éléments communs portent les mêmes numéros de référence. Les figures 1 et 2 ont déjà été décrites en relation avec la description de l'état de la technique.

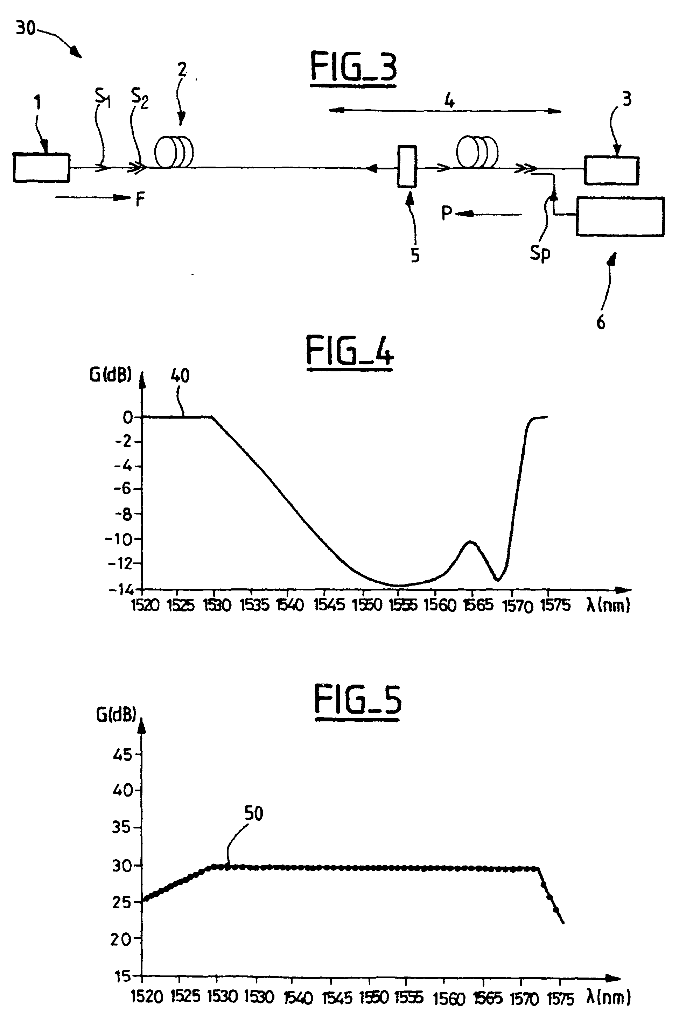

On a représenté en figure 3, un système de transmission 30 selon l'invention dans un premier mode de réalisation comprenant un dispositif émetteur 1 et un dispositif récepteur 3 reliés par une fibre optique de ligne 2 transmettant des signaux utiles (transportant les données) s₁ et s₂ de longueurs d'ondes respectives λ₁ et λ₂ émis par le dispositif émetteur 1. La fibre optique de ligne 2 est par exemple monomode comme les fibres G.652 et G.654 et permet la transmission par exemple de signaux WDM en bande C. La direction de propagation des signaux s₁ et s₂ est représentée par la flèche F en figure 3. Le système de transmission 30 comprend également un laser de pompe 6 de puissance variable (de l'ordre de grandeur du Watt) placé à l'entrée du dispositif récepteur 3 et délivrant de façon continue un signal de pompe sₚ de longueur d'onde voisine de 1455 nm. Ce signal de pompe sₚ injecté dans la fibre de ligne 2 est contra-propagatif car sa direction de propagation des signaux représentée par la flèche P est opposée à celle des signaux s₁ et s₂. Le signal de pompe sₚ est injecté dans la fibre de ligne 2 à l'aide d'un dispositif (non représenté) tel qu'un circulateur optique ou un multiplexeur pompe/signaux WDM à partir du dispositif récepteur 3.

Selon l'invention, le système 30 comprend en outre des moyens d'égalisation de gain tels qu'un GEF, disposés sur la fibre de ligne 2 sur la longueur d'amplification distribuée Raman 4 entre le dispositif émetteur 1 et le laser de pompe 6.

Le système de transmission 30 permet d'amplifier par diffusion Raman stimulée de façon homogène et à haut niveau l'ensemble des signaux WDM de la bande C.

On sait que le gain Raman dépend de la longueur d'onde. A titre d'exemple, en utilisant le signal de pompe sₚ, le gain Raman, en l'absence des moyens 5, pour un signal utile s₁ de longueur d'onde égale à 1530 nm est inférieur au gain Raman pour un signal utile s₂ de longueur d'onde égale à 1555 nm.

La valeur de la puissance injectée (environ 1,75 W) est choisie de sorte que les signaux de la bande C les plus faiblement amplifiés en l'absence des moyens d'égalisation de gain 5 par le gain Raman peuvent atteindre grâce aux moyens d'égalisation de gain 5 selon l'invention une amplification proche de l'amplification critique à l'entrée du dispositif récepteur 3.

Ainsi, le GEF 5 est placé en ligne (c'est-à-dire sur la longueur de transmission de la fibre de ligne 2) de manière à égaliser le gain Raman pour les signaux s₁ et s₂ à l'entrée du dispositif récepteur 3 et à éviter que le signal s₂ soit amplifié au-delà de l'amplification critique.

Plus généralement si l'on considère tous les signaux de la bande C, le profil du GEF 5 en fonction de la longueur d'onde est semblable au profil inversé du gain Raman (cf. figure 1) comme le montre la courbe 40 de la figure 4.

Nous allons décrire maintenant plus en détail le fonctionnement du système 30 à travers le trajet des signaux s₁ et s₂.

Le signal s₁ est envoyé par le dispositif émetteur 1 dans la fibre de ligne 2. Ce signal s₁ est amplifié progressivement par diffusion Raman stimulée sur toute la longueur d'amplification 4. Au cours de sa propagation sur la longueur d'amplification 4, ce signal s₁ traverse le GEF 5 qui le laisse passer puisque son amplification ne dépasse pas l'amplification critique.

Le signal s₂ envoyé simultanément dans la fibre de ligne 2 par le dispositif émetteur 1 est également amplifié progressivement par diffusion Raman stimulée sur toute la longueur d'amplification 4. Cependant, au cours de sa propagation sur la longueur d'amplification 4, ce signal s₂ est atténué par le GEF 5 pour que son gain atteigne sans la dépasser une valeur la plus proche possible de l'amplification critique au niveau du dispositif récepteur 3.

Le profil du gain G entre 1520 nm et 1575 nm à l'entrée du dispositif récepteur 3 du système de transmission 30 est ainsi présenté par la courbe 50 en figure 5.

Selon une variante, un système de transmission selon l'invention peut cumuler une préamplification déportée de type EDFA et une amplification par diffusion Raman stimulée de signaux.

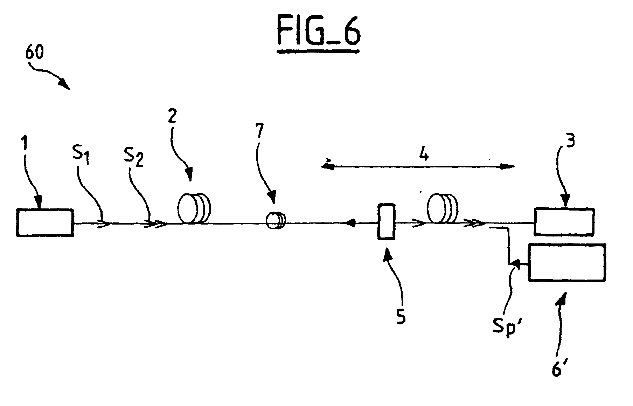

On a représenté en figure 6, un système de transmission 60 selon l'invention dans un second mode de réalisation. Outre les éléments 1, 2, 3, 4 et 5 du système 30, ce système 60 comprend un laser de pompe 6' de puissance variable (de l'ordre du Watt) placé entre le dispositif récepteur 3 et la fibre de ligne 2 délivrant de façon continue une signal de pompe s_{p'} de longueur d'onde voisine de 1480 nm. De plus, une section de fibre optique dopée à l'erbium 7 est insérée dans la fibre de ligne 2 pour réaliser la préamplification de type EDFA. Le signal de pompe s_{p'} est injecté dans la fibre de ligne 2 à l'aide d'un dispositif (non représenté) tel qu'un circulateur optique ou un multiplexeur pompe/signaux WDM à partir du dispositif récepteur 3.

Le système de transmission 60 permet d'amplifier à travers la fibre 7 puis par diffusion Raman stimulée dans la fibre de ligne 2 l'ensemble des signaux WDM de la bande C de façon homogène et à haut niveau.

Ainsi, les moyens d'égalisation de gain 5 sont placés en ligne de manière à égaliser le gain Raman pour les signaux s₁ et s₂ à l'entrée du dispositif récepteur 3 et à éviter que le signal s₂ soit amplifié au-delà de l'amplification critique. En outre, les moyens 5 permettent également de filtrer le bruit généré par l'amplification Raman autour de 1585 nm.

Le signal s₁ est envoyé par le dispositif émetteur 1 dans la fibre de ligne 2. Ce signal s₁ est d'abord préamplifié localement c'est-à-dire sur quelques dizaines de mètres quand il parcourt la section de fibre optique dopée à l'erbium 7 pompée à distance par laser de pompe 6'. Le signal s₁ est ensuite amplifié progressivement dans la fibre de ligne 2 par diffusion Raman stimulée sur toute la longueur d'amplification 4. Au cours de sa propagation sur la longueur d'amplification 4, ce signal s₁ traverse le GEF 5 qui le laisse passer si son amplification ne dépasse pas l'amplification critique.

Le signal s₂ envoyé simultanément par le dispositif émetteur 1 dans la fibre de ligne 2 est également préamplifié à travers la section de fibre optique dopée à l'erbium 7 et est ensuite amplifié par diffusion Raman stimulée sur toute la longueur d'amplification 4. Au cours de sa propagation sur la longueur d'amplification 4, ce signal s₂ est atténué par le GEF 5 qui va ainsi limiter son gain à une valeur la plus proche possible de l'amplification critique.

Bien entendu, la description qui précède a été donnée à titre purement illustratif. On pourra sans sortir du cadre de l'invention remplacer tout moyen par un moyen équivalent.

En particulier, le système de transmission selon l'invention peut comprendre ou non des répéteurs optiques ou des régénérateurs.

Le profil et l'emplacement des moyens d'égalisation de gain, la nature de la fibre de ligne ainsi que de la fibre dopée peuvent également varier en fonction de l'amplification souhaitée.

Le système selon l'invention peut également transmettre des signaux d'autres bandes que la bande C et la bande L dans ce cas, la longueur d'onde du signal de pompe sera choisie en conséquence.

## Revendications

1. Système de transmission (30, 60) par fibre optique entre un dispositif émetteur (1) et un dispositif récepteur (3) d'au moins deux signaux (s₁, s₂) de longueurs d'onde distinctes qui comprend :
• une fibre optique de ligne (2),
• des moyens de pompage (6, 6') pour envoyer dans ladite fibre de ligne, un signal de pompe (sₚ, s_{p'}) destiné à amplifier par diffusion Raman stimulée lesdits signaux de manière distribuée sur une longueur dite d'amplification (4) de ladite fibre,
• des moyens d'égalisation de gain (5) tels que chaque signal est amplifié avec un gain sensiblement identique,
**caractérisé en ce que** lesdits moyens d'égalisation de gain sont disposés en ligne sur ladite longueur d'amplification de sorte que le gain de chaque signal est voisin du gain du signal le plus amplifié.

2. Système de transmission (30, 60) selon la revendication 1 **caractérisé en ce que** lesdits moyens d'égalisation de gain (5) sont passifs.

3. Système de transmission selon l'une des revendications 1 ou 2 **caractérisé en ce que** lesdits moyens d'égalisation de gain sont programmables.

4. Système de transmission (30, 60) selon l'une des revendications 1 à 3 **caractérisé en ce que** lesdits moyens d'égalisation de gain (5) comprennent un filtre d'égalisation de gain.

5. Système de transmission (30, 60) selon l'une des revendications 1 à 4 **caractérisé en ce que** lesdits moyens de pompage (6, 6') sont disposés du côté dudit dispositif récepteur (3).

6. Système de transmission selon l'une des revendications 1 à 4 **caractérisé en ce que** lesdits moyens de pompage sont disposés du côté dudit dispositif émetteur.

7. Système de transmission (30, 60) selon l'une des revendications 1 à 6 **caractérisé en ce que** ledit signal de pompe (sₚ, s_{p'}) est contra-propagatif.

8. Système de transmission selon l'une des revendications 1 à 6 **caractérisé en ce que** ledit signal de pompe est co-propagatif.

9. Système de transmission (60) selon l'une des revendications 1 à 8 **caractérisé en ce qu'**il comprend une section de fibre dopée à l'erbium (7).

10. Système de transmission (60) selon la revendication 9 **caractérisé en ce que** ladite section de fibre dopée à l'erbium (7) est déportée.

## Claims

1. An optical fibre transmission system (30, 60) between a sender (1) and a receiver (3) of at least two signals (Sp₁, Sp₂) with different wavelengths, which includes:
• a line optical fibre (2),
• pumping means (6, 6') for sending into said line fibre a pump signal (Sp, Sp') adapted to amplify said signals by distributed stimulated Roman scattering over an amplification length (4) of said fibre,
• gain equalizing means (5) such that each signal is amplified with substantially the same gain, **characterized in that** said gain equalizing means are disposed in-line over said amplification length so that the gain of each signal is close to the gain of the most strongly amplified signal.

2. A transmission system (30, 60) according to claim 1 **characterized in that** said gain equalizing means (5) are passive.

3. A transmission system according to either claim 1 or claim 2 **characterized in that** said gain equalizing means are programmable.

4. A transmission system (30, 60) according to any of claims 1 to 3 **characterized in that** said gain equalizing means (5) include a gain equalizing filter.

5. A transmission system according to any of claims 1 to 4 **characterized in that** said pumping means (6, 6') are disposed at the receiver end (3).

6. A transmission system according to any of claims 1 to 4 **characterized in that** said pumping means are disposed at the sender end.

7. A transmission system (30, 60) according to any of claims 1 to 6 **characterized in that** said pump signal (Sp, Sp') is a contrapropagating signal.

8. A transmission system according to any of claims 1 to 6 **characterized in that** said pump signal is a copropagating signal.

9. A transmission system (60) according to any of claims 1 to 8 **characterized in that** it includes an erbium-doped fibre section (7).

10. A transmission system (60) according to claim 9 **characterized in that** said erbium-doped fibre section (7) is remote.

## Patentansprüche

1. Übertragungssystem (30, 60) über eine Lichtleitfaser zwischen einer Sendevorrichtung (1) und einer Empfangsvorrichtung (3) mit mindestens zwei Signalen (s₁, s₂) unterschiedlicher Wellenlängen, welches aufweist:
• eine Leitungslichtleitfaser (2);
• Pumpvorrichtungen (6, 6'), um ein Pumpsignal (sₚ, s_{p'}) in die Leitungslichtleitfaser zu senden, welches die Aufgabe hat, diese Signale durch stimulierte Ramanstreuung über eine sogenannte Verstärkungslänge (4) dieser Faser verteilt zu verstärken;
• Verstärkungsausgleichsvorrichtungen (5) in der Art, dass jedes Signal mit einem im Wesentlichen identischen Verstärkungsfaktor verstärkt wird;
**dadurch gekennzeichnet, dass** diese Verstärkungsausgleichsvorrichtungen auf der Verstärkungslänge in Reihe so angeordnet sind, dass die Verstärkung jedes Signals in der Nähe der Verstärkung des am meisten verstärkten Signals liegt.

2. Übertragungssystem (30, 60) nach Anspruch 1, **dadurch gekennzeichnet, dass** die Verstärkungsausgleichsvorrichtungen (5) passiv sind.

3. Übertragungssystem (30, 60) nach einem der Ansprüche 1 oder 2, **dadurch gekennzeichnet, dass** die Verstärkungsausgleichsvorrichtungen programmierbar sind.

4. Übertragungssystem (30, 60) nach einem der Ansprüche 1 bis 3, **dadurch gekennzeichnet, dass** die Verstärkungsausgleichsvorrichtungen (5) einen Verstärkungsausgleichsfilter aufweisen.

5. Übertragungssystem (30, 60) nach einem der Ansprüche 1 bis 4, **dadurch gekennzeichnet, dass** die Pumpvorrichtungen (6, 6') auf der Seite der Empfangsvorrichtung (3) angeordnet sind.

6. Übertragungssystem (30, 60) nach einem der Ansprüche 1 bis 4, **dadurch gekennzeichnet, dass** die Pumpvorrichtungen (6, 6') auf der Seite der Sendevorrichtung (3) angeordnet sind.

7. Übertragungssystem (30, 60) nach einem der Ansprüche 1 bis 6, **dadurch gekennzeichnet, dass** das Pumpsignal (sₚ, s_{p'}) contra-propagierend ist.

8. Übertragungssystem (30, 60) nach einem der Ansprüche 1 bis 6, **dadurch gekennzeichnet, dass** das Pumpsignal (sₚ, s_{p'}) co-propagierend ist.

9. Übertragungssystem (60) nach einem der Ansprüche 1 bis 8, **dadurch gekennzeichnet, dass** es einen Erbium-dotierten Faserabschnitt (7) aufweist.

10. Übertragungssystem (60) nach Anspruch 9, **dadurch gekennzeichnet, dass** dieser Erbium-dotierte Faserabschnitt (7) entfernt angeordnet ist.
